# EUROPEAN PATENT APPLICATION

(11) **EP 4 686 207 A1**
(43) Date of publication of application: **28.01.2026**
(21) Application number: 24190279.0
(22) Date of filing: 23.07.2024
(51) Int. Cl.: H04N 21/258, H04N 21/8358, H04N 21/845

(54) **METHOD FOR WATERMARKING AT LEAST ONE PORTION OF DATA, METHOD FOR DETERMINING A TAG INFORMATION IN A WATERMARK PATTERN, CORRESPONDING COMPUTER PROGRAM PRODUCTS AND DEVICES**

(71) Applicant: Nagravision Sarl, 1033 Cheseaux-sur-Lausanne (CH)
(72) Inventor: CELIK, Mehmet, 1033 CHESEAUX-SUR-LAUSANNE (CH); MARIE, Pascal, 1033 CHESEAUX-SUR-LAUSANNE (CH)
(74) Representative: Santarelli

(57) **Abstract**

A method is proposed for watermarking at least one portion of data. Such method comprises:
- receiving a request, initiated by a media player, for the at least one portion of data, the request comprising communication information for providing the at least one portion of data to the media player, the communication information comprising a plurality of fields defining the request for the at least one portion of data;
- generating, based on at least two of the plurality of fields of the communication information, a tag information;
- generating, based on the tag information, a watermark pattern representative of the tag information; and
- watermarking the at least one portion of data delivering at least one portion of data embedding the watermark pattern.

## Description

### 1. FIELD OF THE DISCLOSURE

The field of the disclosure is that of the delivery of digital assets (e.g. digital audio or video assets) to end-users.

More specifically, the disclosure relates to a technic for preventing piracy of delivered digital assets.

The disclosure can be of interest in any field wherein digital assets have to be delivered to end-users. This is the case for instance in the field of audio or video streaming.

### 2. TECHNOLOGICAL BACKGROUND

To fight content piracy, content owners increasingly request that invisible watermarks are inserted into their digital assets, e.g. live video or VoD, when these assets are delivered to the end-users. The watermark is used e.g. for traitor-tracing: the identifier encoded within the watermark allows to uniquely identify the media players that received the content from a streaming platform, or the respective user account used to access the content, and then leaked or shared the content publicly.

A common approach in the field of streaming relies on A/B watermarking. It consists in preparing two versions of the same content, one with a mark A and one with a mark B and to provide unique sequences of video segments to respective media players - each video segment either encoding an A or a B mark. The identifier of a given media player or of a respective user account corresponds to the sequence of A/B marks. In other words, if mark A encodes e.g. a low state bit "0" and mark B encodes a high state bit "1", the sequence of A/B marks corresponds to the binary representation of an identifier associated with the considered player. If the digital asset is pirated, the sequence of A/B marks is extracted to identify the pirate user of the corresponding media player. The media player or the user account may be blocked for further streaming as a result.

However, this requires creating a unique watermark token (comprising e.g. a watermark identifier or directly a watermark pattern) when accessing the content, e.g. during a streaming session. Such watermark token needs to be provided to the media player which, in turn, needs to append it to the segment request when accessing the content. Consequently, ease of integration into existing workflows is the first obstacle for watermark deployment. Creating a unique watermark token and appending it to the segment request complicates integration. For instance:
- this requires extra functionalities to be implemented in the backend, thus increasing complexity;
- this requires changes into the media player software (e.g. to append the watermark token in Hypertext Transfer Protocol, HTTP, request headers); and
- this increases request size (e.g. whereas Uniform Resource Locator, URL, length may be limited).

There is thus a need for a solution allowing an easy integration in existing workflows of the tagging of a digital asset through watermarking (e.g., through an A/B watermarking scheme) in the perspective of traitor-tracing in case the digital asset is leaked or shared publicly.

### 3. SUMMARY

A particular aspect of the present disclosure relates to a method for watermarking at least one portion of data. Such method comprises:
- receiving a request, initiated by a media player, for the at least one portion of data, the request comprising communication information for providing the at least one portion of data to the media player, the communication information comprising a plurality of fields defining parameters used for the providing;
- generating, based on at least two of the plurality of fields of the communication information, a tag information;
- generating, based on the tag information, a watermark pattern representative of the tag information; and
- watermarking the at least one portion of data delivering at least one portion of data embedding the watermark pattern.

Thus, the present disclosure proposes a new and inventive solution for allowing an easy integration in existing workflows of the tagging of a digital asset (e.g. a digital video or audio content) through watermarking in the perspective of traitor-tracing in case the digital asset is leaked or shared publicly.

More particularly, the generation of the tag information is based on the communication information inherently present in the request received by the server (e.g. a CDN server) for providing the content. Such communication information comprises a plurality of fields defining parameters used for providing the requested data to the media player. The communication information encompasses both the information allowing the establishment of the communication channel with the media player for providing the content to the media player (e.g. through defining the communication protocol to be used, the supported format, the supported format, etc.) and the rights to access the content (e.g. CDN access token identifier or creation/expiry time). Conversely, the communication information does not comprise a unique identifier of the media player (or uniquely identifying the streaming session running on the media player) nor a unique watermark token to be used for watermarking the content. This allows using existing media players without any modification and does not increase the request size.

In some embodiments, the at least two of the plurality of fields of the communication information comprise at least one field defining a parameter used for implementing the communication protocol used for providing the at least one portion of data to the media player.

In some embodiments, the generating the tag information implements a hash function of the at least two of the plurality of fields.

In some embodiments, the at least one of the plurality of fields belongs to the group comprising:
- a client internet protocol address;
- a client internet protocol port;
- a user-agent identifier;
- a JA3 fingerprint;
- a content delivery network, herein CDN, access token identifier;
- a CDN token creation time; and
- a CDN token expiry time.

In some embodiments, the generating, based on the tag information, the watermark pattern implements an encoding of the tag information using a collusion secure code delivering the watermark pattern.

In some embodiments, the watermarking the at least one portion of data implements an A/B watermarking scheme, the A/B sequence being a function of the watermark pattern.

In some embodiments, the method for associating at least one portion of data with a media player comprises: sending the at least one portion of data embedding the watermark pattern to the media player.

In some embodiments, the method for associating at least one portion of data with a media player comprises: determining if the tag information is equal or not to a predetermined tag information associated to a previously received request initiated by a media player not allowed to receive the at least one portion of data, said sending the at least one portion of data being executed only if the tag information is not equal to the predetermined tag information.

In some embodiments, the method for associating at least one portion of data with a media player comprises: writing a content of the request into a log file dedicated to the tracing of the received requests for at least one portion of data.

Another aspect of the present disclosure relates to a method for determining a tag information in a watermark pattern embedded in at least one portion of data watermarked by execution of the method for watermarking according to any of the embodiments disclosed above. Such method for determining a tag information comprises:
- obtaining the at least one portion of data;
- extracting, from the at least one portion of data, the watermark pattern representative of the tag information;
- determining, from the extracted watermark pattern, the tag information.

In some embodiments, the determining, from the extracted watermark pattern, the tag information, comprises:
- obtaining a test tag information;
- generating, based on the test tag information, a test watermark pattern representative of the test tag information by implementing a same operation as for the generation of the watermark pattern based on the tag information; and
- comparing the test watermark pattern and the extracted watermark pattern, the tag information being determined as being the test tag information if the test watermark pattern is a same pattern as the extracted watermark pattern.

For instance, the obtained at least one portion of data is identified as being part of a pirate digital asset. The present method for determining a tag information thus allows identifying the session running on a media player at the origin of the request for the digital asset now identified as a pirate digital asset while no unique identifier was assigned to the session or to the media player in question. This allows fighting content piracy while using existing media players without any modification.

In some embodiments, when the test tag information is a same information as the tag information, the method for determining a tag information comprises: storing the tag information in a memory of the device executing the determining for generating a deny-list of media players having previously initiated requests for at least one portion of data and no more allowed to receive another portion of data.

In some embodiments, the obtaining a test identifier comprises selecting a test tag information among a set of predefined tag information.

In some embodiments, the obtaining a test tag information comprises:
- reading a content of a previously received request initiated by a respective media player for at least one portion of data, the previously received request comprising respective communication information for providing the at least one portion of data to the respective media player, the respective communication information comprising a plurality of fields defining parameters used for the providing; and
- generating the test tag information based on at least two of the plurality of fields of the respective communication information by implementing a same operation as for the generation of the tag information based on the at least two of the plurality of fields of the communication information.

In some embodiments, the obtaining a test tag information comprises:
- reading the test tag information from a list of tag information generated based on at least two of a plurality of fields of respective given communication information by implementing a same operation as for the generation of the tag information based on the at least two of the plurality of fields of the communication information, the respective communication information being comprised in a previously received request initiated by a respective media player for at least one portion of data.

Another aspect of the present disclosure relates to a computer program product comprising program code instructions for implementing the above-mentioned method for watermarking at least one portion of data (in any of the different embodiments discussed above), when the program is executed on a computer or a processor.

Another aspect of the present disclosure relates to a computer program product comprising program code instructions for implementing the above-mentioned method for determining a tag information in a watermark pattern embedded in at least one portion of data (in any of the different embodiments discussed above), when the program is executed on a computer or a processor.

Another aspect of the present disclosure relates to an electronic device comprising means configured for executing all or part of the steps of the above-mentioned method for watermarking at least one portion of data (in any of the different embodiments discussed above). Thus, the features and advantages of this first device are the same as those of the corresponding steps of said method. Therefore, they are not detailed any further.

Another aspect of the present disclosure relates to an electronic device comprising means configured for executing all or part of the steps of the above-mentioned method for determining a tag information in a watermark pattern embedded in at least one portion of data (in any of the different embodiments discussed above). Thus, the features and advantages of this first device are the same as those of the corresponding steps of said method. Therefore, they are not detailed any further.

### 4. LIST OF FIGURES

Other features and advantages of embodiments shall appear from the following description, given by way of indicative and non-exhaustive examples and from the appended drawings, of which:
- Figure 1 illustrates a first server communicatively connected to a second server which is in turn communicatively connected to different media players according to one embodiment of the present disclosure;
- Figure 2 illustrates an example of the structural blocks of a first electronic device allowing steps of the method of Figure 5 to be executed by the first server of Figure 1 according to one embodiment of the present disclosure;
- Figure 3 illustrates an example of the structural blocks of a second electronic device allowing steps of the method of Figure 4 to be executed by the second server of Figure 1 according to one embodiment of the present disclosure;
- Figure 4 illustrates a flowchart of a method for watermarking at least one portion of data according to one embodiment of the present disclosure; and
- Figure 5 illustrates a flowchart of a method for determining a tag information in a watermark pattern embedded in at least one portion of data according to one embodiment of the present disclosure.

### 5. DETAILED DESCRIPTION

In all of the figures of the present document, the same numerical reference signs designate similar elements and steps.

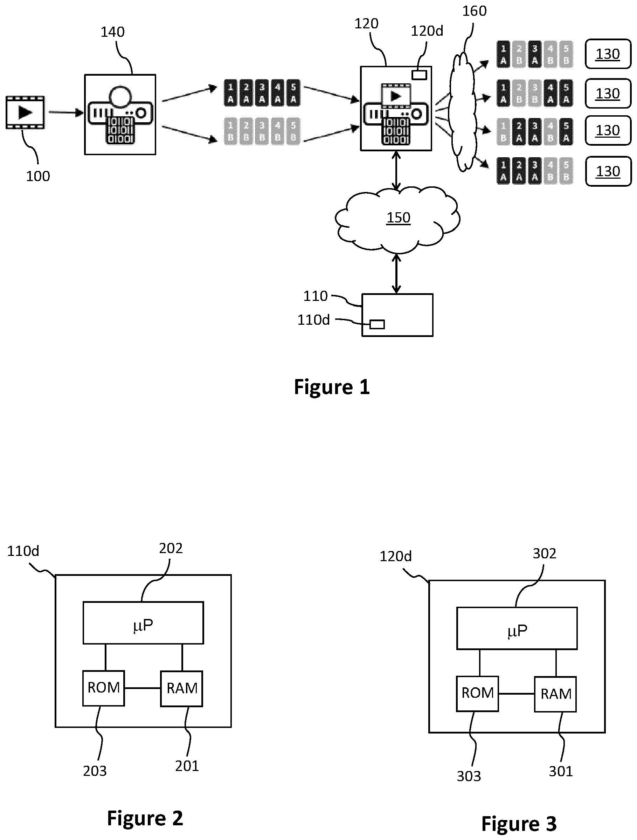

Referring now to **figure 1****,** we describe a first server 110 communicatively connected to a second server 120 which is in turn connected to different media players 130 according to one embodiment of the present disclosure.

For instance, the first server 110 is communicatively connected to the second server 120 through a first communications network 150 implementing wired broadband communications links. Such wired communications link is e.g. a xDSL communications link and implements e.g. an internet protocol. However, in some embodiments, the first communications network 150 is a wireless communications network, e.g. based on a cellular protocol (e.g. a 3GPP 2G, 3G, 4G or 5G protocol) or on a WiMAX protocol.

Back to Figure 1, the second server 120 is communicatively connected to different media players 130 (e.g. a terminal equipment such as a TV, a smartphone, a computer...) through a second communications network 160 implementing wireless communications links. The second communications network 160 is e.g. of the WLAN type (e.g. a WiFi network) or based on a cellular protocol (e.g. a 3GPP 2G, 3G, 4G or 5G protocol) or on a WiMAX protocol. In other embodiments, the second communications network 160 implements wired broadband communications links, e.g. xDSL communications links. In some embodiments, the first communications network 150 and the second communications network 160 are a same network.

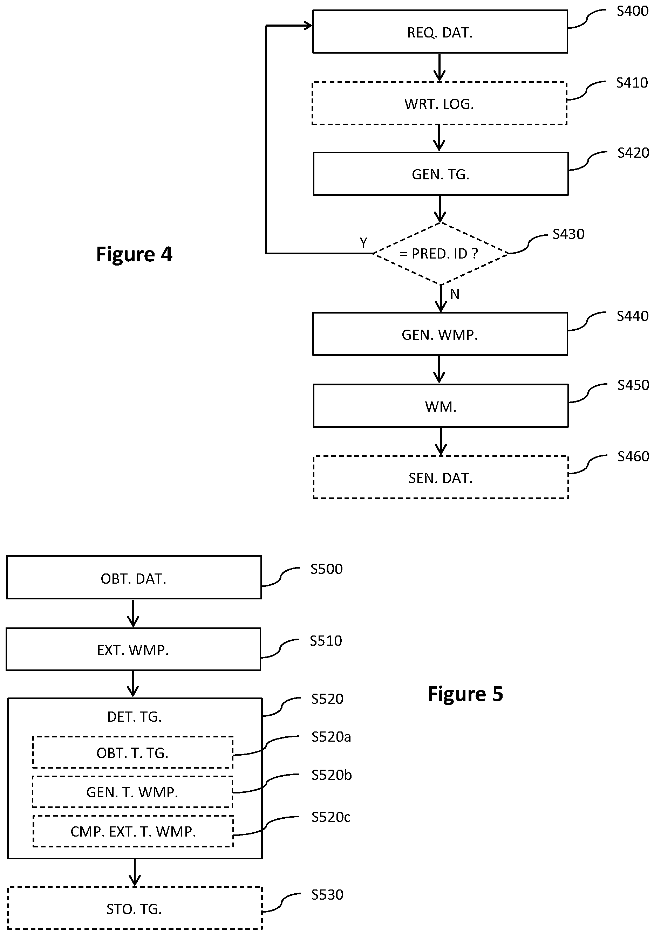

Back to Figure 1, the second server 120 is e.g. a content delivery network, CDN, server that executes the method for watermarking at least one portion of data as discussed below in relation with Figure 4.

For instance, in the context of A/B watermarking, the second server 120 receives from a third-party server 140 the A and B versions of a content 100 (e.g. an audio or a video content) comprising the at least one portion of data requested by a media player 130. The A and B versions of a content 100 are e.g. in a Dynamic Adaptive Streaming over HTTP, DASH, format or in a HTTP Live Streaming, HLS, format or in a Transport Stream, TS, or fragmented mp4 format.

As discussed below in relation with Figure 4, the request for at least one portion of data of the content 100 initiated by a given media player 130 and received by the second server 120 comprises communication information. Such communication information comprises a plurality of fields defining parameters used for providing the at least one portion of data to the media player 130. Based on at least two such fields, the second server 120 generates a tag information. Such tag information is thus representative of the session running on the media player 130 that initiated the request. Based on the tag information, the second server 120 generates a watermark pattern representative of the tag information. The second server 120 then watermarks the at least one portion of data delivering at least one portion of data embedding the watermark pattern. For instance, in the context of A/B watermarking, the A/B sequence of the watermarked at least one portion of data is a function of the watermark pattern.

According to the present technic, the communication information comprises a plurality of fields defining parameters used for providing the requested data to the media player 130 that initiated the request to the second server 120. Such parameters may comprise:
- parameters directly sent by the media player 130 to the second server 120 when requesting the at least one portion of data; and/or
- parameters received by the second server 120 whether from the second communications network 160 or when establishing the communication link with the media player 130.

For instance, such a parameter is representative of:
- an information allowing the establishment of the communication channel with the media player 130 for providing the requested data to the media player 130 (e.g. through defining the communication protocol to be used, the supported format, etc.);
- an information representative of the rights to access the content (e.g. a CDN access token identifier or creation/expiry time).

Conversely, the communication information according to the present technic does not comprise information uniquely identifying the media player 130 itself (or uniquely identifying the streaming session running on the media player 130), nor uniquely identifying the watermark pattern to be used (like e.g. a watermark pattern or a watermark identifier embedded in prior art requests). As such, the present technic also applies to requests not including a unique identifier of the media player 130 nor a unique watermark token. This allows using existing media players 130 without any modification. This also does not increase the size of the request.

Back to Figure 1, the first server 110 executes a method for determining a tag information in a watermark pattern embedded in at least one portion of data when the at least one portion of data has been watermarked by execution of the method of Figure 4. More particularly, the method for determining a tag information in a watermark pattern embedded in at least one portion of data is discussed below in relation with Figure 5.

For instance, if the at least one portion of data watermarked by execution of the method of Figure 4 is identified as being part of a pirate digital asset, the first server 110 is able to identify a session running on a media player 130 at the origin of a pirate digital asset while no unique identifier was assigned to the media player 130 or to the session in question. This allows fighting content piracy while using existing media players 130 without any modification. For instance, the first server 110 may inform the second server 120 of a tag information associated to such session on a media player 130 at the origin of a pirate digital asset. Consequently, the second server 120 is able to determine if a given media player 130 at the origin of another request for a content 100 is allowed to receive it or not.

In the examples above, the context of A/B watermarking was considered. However, other watermarking schemes can be considered as long as the tag information is generated based on the fields of the communication information as defined above.

In order to be able to implement all or part of the steps of the method for determining a tag information in a watermark pattern embedded in at least one portion of data in the various embodiments disclosed below in relationship with Figure 5, the first server 110 comprises a first electronic device 110d. In some embodiments the first electronic device 110d comprises (**Figure 2**):
- a non-volatile memory 203 (e.g. a read-only memory (ROM), a hard disk, a flash memory, etc.);
- a volatile memory 201 (e.g. a random-access memory or RAM) and a processor 302.

The non-volatile memory 203 is a non-transitory computer-readable carrier medium. It stores executable program code instructions, which are executed by the processor 202 in order to enable implementation of some steps of the method described below (method for determining a tag information in a watermark pattern embedded in at least one portion of data) in the various embodiments disclosed in relationship with Figure 5.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for determining a tag information in a watermark pattern embedded in may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In order to be able to implement all or part of the steps of the method for watermarking at least one portion of data in the various embodiments disclosed below in relationship with Figure 4, the second server 120 comprises a second electronic device 120d. In some embodiments the second electronic device 120d comprises (Figure 3):
- a non-volatile memory 303 (e.g. a read-only memory (ROM), a hard disk, a flash memory, etc.);
- a volatile memory 301 (e.g. a random-access memory or RAM) and a processor 302.

The non-volatile memory 303 is a non-transitory computer-readable carrier medium. It stores executable program code instructions, which are executed by the processor 302 in order to enable implementation of some steps of the method described below (method for watermarking at least one portion of data) in the various embodiments disclosed in relationship with Figure 4.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The steps of the method for watermarking at least one portion of data may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the first server 110 and the second server 120 are a same server. In some embodiments, the first electronic device 110d and the second electronic device 120d are a same electronic device.

Referring now to **Figure 4****,** we describe a method for watermarking at least one portion of data according to one embodiment of the present disclosure.

More particularly, in a **step S400,** the second electronic device 120d receives a request, initiated by the media player 130, for the at least one portion of data, the request comprising communication information for providing the at least one portion of data to the media player 130. The communication information comprises a plurality of fields defining parameters used for providing the at least one portion of data to the media player 130.

As discussed above, such a parameter is representative of e.g.:
- an information allowing the establishment of the communication channel with the media player 130 for providing the requested data to the media player 130 (e.g. through defining the communication protocol to be used, the supported format, etc.); and/or
- an information representative of the rights to access the content (e.g. a CDN access token identifier or creation/expiry time).

For instance, at least one of the plurality of fields belongs to the group comprising:
- a client internet protocol, IP, address (e.g. the IP address of the media player 130);
- a client IP port (e.g. the IP port of the media player 130);
- a user-agent identifier (e.g. an identifier of a web browser running on the media player 130);
- a JA3 fingerprint;
- a CDN access token identifier (e.g. an access token associated with the second server 120);
- a CDN token creation time (e.g. a token creation time delivered by the second server 120); and
- a CDN token expiry time (e.g. a token expiry time delivered by the second server 120).

Back to Figure 4, in a **step S410,** the second electronic device 120d writes a content of the request into a log file dedicated to the tracing of the received requests for at least one portion of data.

In some embodiments of the method for determining a tag information in a watermark pattern discussed below in relation with Figure 5, such log file may be used by the first electronic device 110d for determining the tag information. However, in some embodiments discussed below in relation with Figure 5, such log file is not used by the first electronic device 110d. Thus, in some embodiments of the method for watermarking at least one portion of data, the second electronic device 120d does not executes the step S410.

Back to Figure 4, in a **step S420,** the second electronic device 120d generates, based on at least two of the plurality of fields of the communication information, a tag information. For instance, the generation of the tag information implements a hash function of all or part of the communication information.

In some embodiments, the at least two of the plurality of fields of the communication information comprise at least one field defining a parameter used for implementing the communication protocol used for providing the at least one portion of data to the media player 130.

In order to illustrate our purpose in a non-limiting way, we provide below examples of the generation of the tag information based on requests following the HTTP format. For instance, all or part of the following fields (here provided with associated example values) are directly present in a HTTP request for video segments:

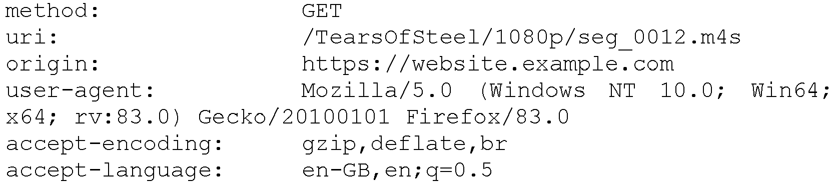

Optionally, a CDN token may be present in the request with the following fields (here still provided with associated example values):

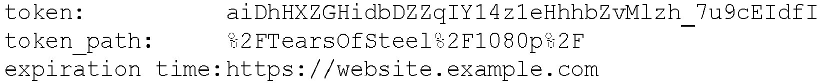

In addition to those fields, the request as received by the server, e.g. a CDN, is supplemented by all or part of the following fields (here still provided with associated example values) received whether directly from the second communications network 160 or when establishing the communication link with the media player 130:

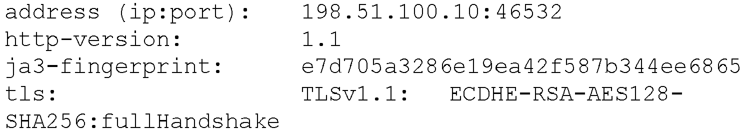

According to known technics (e.g. known A/B watermarking scheme), a watermark token (e.g. a watermark pattern or a watermark identifier) is also present in the request sent by the media player to the server. This is no more required according to the present technic. However, nothing prevents using the present technic with such requests incorporating such watermark token, even if such watermark pattern or watermark identifier is not used to generate the tag information at the end.

For instance, based on the above example values for the various fields of the request received by the server, we provide below three examples for the tag information as generated by execution of the step S420:
- in example 1, Viewer ip-address and user-agent are concatenated and hashed. We thus obtain for the tag information: sha256("198.51.100.10 | Mozilla/5.0 (Windows NT 10.0; Win64; x64; rv:83.0) Gecko/20100101 Firefox/83.0") = 3db0b03b87ed5a868a49c7152d7e5bab339434547d07b1feec5bac919b56d996;
- in example 2, Viewer ip-address and JA3-fingerprint are concatenated, hashed, and truncated to 32-bits. We thus obtain for the tag information: truncate(sha256("198.51.100.10 | e7d705a3286e19ea42f587b344ee6865")) = e313dd14;
- in example 3, CDN token expiration time, accept-encoding, ja3-fingerprint are concatenated and hashed. We thus obtain for the tag information: md5("1598024587 | gzip,deflate,br | e7d705a3286e19ea42f587b344ee6865") = 3ee5daab4b4743ed8a45e46ac177aff1.

In the non-limiting examples above, at least two of the parameters defined in respective fields of the communication information allowing providing the requested segments to the media player 130 at the origin of the request are used for generating the tag information. More particularly, in example 1 and in example 2, at least one of those fields defines a parameter (the ip-address in the present examples) used for implementing the communication protocol used for providing the requested segments to the media player 130 at the origin of the request.

Back to Figure 4, in a **step S430,** the second electronic device 120d determines if the tag information is equal or not to a predetermined tag information associated to a previously received request initiated by a media player 130 not allowed to receive the at least one portion of data.

For instance, in some embodiments of the method for determining a tag information discussed below in relation with Figure 5, the first electronic device 110d determines such predetermined tag information and provides it to the second electronic device 120d, e.g. through a deny-list. Such predetermined tag information is e.g. an identifier associated to a session (e.g., a streaming session) on a media player 130 at the origin of a pirate digital asset.

Returning to Figure 4, if in step S430 the second electronic device 120d determines that the tag information is equal to the predetermined tag information, the second electronic device 120d does not execute all or part of the subsequent steps S440, S450 and S460. At least the step S460 is not executed if the second electronic device 120d determines that the tag information is equal to the predetermined tag information. In such cases, the second electronic device 120d is ready to execute again the step S400.

Conversely, if in step S430 the second electronic device 120d determines that the tag information is not equal to the predetermined tag information, the second electronic device 120d executes at least the step S440 and the step S450 discussed below.

In some embodiments, the step S430 is not executed and the step S440 is systematically executed.

Back to Figure 4, in the **step S440,** the second electronic device 120d generates, based on the tag information, a watermark pattern representative of the tag information.

For instance, the generation of the watermark pattern implements an encoding of the tag information using a collusion secure code or an error-correction-code (ECC) delivering the watermark pattern.

Back to Figure 4, in a **step S450,** the second electronic device 120d watermarks the at least one portion of data delivering at least one portion of data embedding the watermark pattern.

For instance, in embodiments wherein A/B watermarking is considered, the watermarking the at least one portion of data implements an A/B watermarking scheme, the A/B sequence being a function of the watermark pattern.

Back to Figure 4, in a **step S460,** the second electronic device 120d sends the at least one portion of data embedding the watermark pattern to the media player 130 that initiated the request.

However, in other embodiments, this is another device of the second server 120 that sends the at least one portion of data embedding the watermark pattern to the media player 130. Indeed, such sending functionality may be already present in the second server 120 according to legacy technics so that the second electronic device 120d does not need to implement it.

Referring now to **Figure 5****,** we describe a method for determining a tag information in a watermark pattern embedded in at least one portion of data according to one embodiment of the present disclosure.

More particularly, the at least one portion of data has been watermarked by executing the method for watermarking of Figure 4 (according to any of the embodiments discussed above in relation with Figure 4).

Accordingly, in a **step S500,** the first electronic device 110d obtains the at least one portion of data. For instance, the first electronic device 110d receives, from the second server 120, the at least one portion of data identified as a pirate digital asset.

Back to Figure 5, in a **step S510,** the first electronic device 110d extracts, from the at least one portion of data, the watermark pattern representative of the tag information.

In a **step S520,** the first electronic device 110d determines, from the extracted watermark pattern, the tag information. For instance, during such step of determining, the first electronic device 110d executes:
- a **step S520a** wherein the first electronic device 110d obtains a test tag information;
- a **step S520b** wherein the first electronic device 110d generates a test watermark pattern representative of the test tag information by implementing a same operation as for the generation of the watermark pattern based on the tag information (step S440 discussed above in relation with Figure 4); and
- a **step S520c** wherein the first electronic device 110d compares the test watermark pattern and the extracted watermark pattern, the tag information being determined as being the test tag information if the test watermark pattern is a same pattern as the extracted watermark pattern.

However, in some embodiments, the tag information is directly determined from the extracted watermark pattern by executing an operation that is the inverse of the operation executed for the generation of the watermark pattern based on the tag information (i.e. the inverse of the operation executed during step S440 discussed above in relation with Figure 4). In such embodiments, the steps S520a, S520b and S520c are not executed.

Back to Figure 5, a common use case for such method for determining a tag information is when the at least one portion of data obtained in step S500 is identified as being part of a pirate digital asset. In such case, the present method for determining a tag information thus allows identifying the session running on a media player 130 at the origin of the request for the digital asset now identified as a pirate digital asset while no unique identifier was assigned to the session or to the media player 130 in question. This allows fighting content piracy while using existing media players 130 without any modification.

For instance, when a test tag information is determined as corresponding to a tag information associated to a session running on a media player 130 or to the media player 130 at the origin of a request for the digital asset now identified as a pirate digital asset, the test tag information is provided to the second electronic device 120d (e.g. through a deny-list comprising a listing of predetermined identifiers of media players 130 determined by the first electronic device 110d e.g. as being at the origin of pirate digital asset(s)). As discussed above in relation with Figure 4, such identifier provided to the second electronic device 120d may be used for executing the step S430.

Accordingly, in a **step S530,** when the test tag information is a same information as the tag information, the first electronic device 110d stores the tag information in a memory of the first electronic device 110d for generating a deny-list of media players 130 having previously initiated requests for the at least one portion of data and no more allowed to receive another portion of data. Such deny-list is e.g. provided to the second electronic device 120d for execution of the step S430 as discussed above. However, in other embodiments, such deny-list is not generated.

Back to Figure 5, in some embodiments, during the step S520a the first electronic device 110d selects a test tag information among a set of predefined tag information. Thus, the first electronic device 110d tries all or part of the possible tag information, e.g. in a "brute force" approach, for determining the tag information the extracted watermark pattern is representative of. Such approach is suited for relatively short tag information, e.g. less than 16 or 24 bits long.

Conversely, in some embodiments, during the step S520a the first electronic device 110d executes:
- reading a content of a previously received request initiated by a respective media player 130 for at least one portion of data, the request comprising respective communication information comprising a plurality of fields defining parameters used for providing the at least one portion of data to the respective media player 130. for instance, such content of a previously received request is received from the second electronic device 120d, e.g. through the form of a log file as discussed above in relation with Figure 4 (step S410); and
- generating the test tag information based on at least two of the plurality of fields of the respective communication information by implementing a same operation as for the generation of the tag identifier based on the at least two of the plurality of fields of the communication information (see step S420 discussed above in relation with Figure 4).

Such embodiments are particularly suited for relatively long tag information, e.g. more than 16 or 24 bits long. Such approach prevents from having to try all or part of the possible tag information (e.g. the "brute force" approach discussed above).

In some embodiments, during the step S520a the first electronic device 110d executes:
- reading the test tag information from a list of tag information generated based on at least two of a plurality of fields of respective communication information by implementing a same operation as for the generation of the tag information based on the at least two of the plurality of fields of the communication information (see step S420 discussed above in relation with Figure 4). The respective communication information is comprised in previously received requests initiated by a respective media player 130 for at least one portion of data.

Such embodiments are particularly efficient, e.g. for relatively long tag information as we do not need to reconstruct the test tag information at the time of the comparison with the tag information embedded in the digital asset now identified as a pirate digital asset.

## Claims

1. Method for watermarking at least one portion of data,
**characterized in that** it comprises:
- receiving (S400) a request, initiated by a media player (130), for the at least one portion of data, the request comprising communication information for providing the at least one portion of data to the media player, the communication information comprising a plurality of fields defining parameters used for the providing;
- generating (S420), based on at least two of the plurality of fields of the communication information, a tag information;
- generating (S440), based on the tag information, a watermark pattern representative of the tag information; and
- watermarking (S450) the at least one portion of data delivering at least one portion of data embedding the watermark pattern.

2. Method according to claim 1, wherein the generating the tag information implements a hash function of the at least two of the plurality of fields.

3. Method according to claim 1 or 2, wherein at least one of the plurality of fields belongs to the group comprising:
- a client internet protocol address;
- a client internet protocol port;
- a user-agent identifier;
- a JA3 fingerprint;
- a content delivery network, herein CDN, access token identifier;
- a CDN token creation time; and
- a CDN token expiry time.

4. Method according to any of the claims 1 to 3, wherein the generating, based on the tag information, the watermark pattern implements an encoding of the tag information using a collusion secure code delivering the watermark pattern.

5. Method according to claim 4, wherein the watermarking the at least one portion of data implements an A/B watermarking scheme, the A/B sequence being a function of the watermark pattern.

6. Method according to any of the claims 1 to 5, comprising:
- sending (S460) the at least one portion of data embedding the watermark pattern to the media player.

7. Method according to claim 6, comprising:
- determining (S430) if the tag information is equal or not to a predetermined tag information associated to a previously received request initiated by a media player not allowed to receive the at least one portion of data, said sending the at least one portion of data being executed only if the tag information is not equal to the predetermined tag information.

8. Method according to any of the claims 1 to 7, comprising:
- writing (S410) a content of the request into a log file dedicated to the tracing of the received requests for at least one portion of data.

9. Method for determining a tag information in a watermark pattern embedded in at least one portion of data watermarked by execution of the method for watermarking according to any of the claims 1 to 8, the method comprising:
- obtaining (S500) the at least one portion of data;
- extracting (S510), from the at least one portion of data, the watermark pattern representative of the tag information;
- determining (S520), from the extracted watermark pattern, the tag information.

10. Method according to claim 9, wherein the determining, from the extracted watermark pattern, the tag information, comprises:
- obtaining (S520a) a test tag information;
- generating (S520b), based on the test tag information, a test watermark pattern representative of the test tag information by implementing a same operation as for the generation of the watermark pattern based on the tag information; and
- comparing (S520c) the test watermark pattern and the extracted watermark pattern, the tag information being determined as being the test tag information if the test tag information is a same information as the tag information.

11. Method according to claim 10, wherein the obtaining a test tag information comprises selecting a test tag information among a set of predefined tag information.

12. Method according to claim 10, wherein the obtaining a test tag information comprises:
- reading a content of a previously received request initiated by a respective media player for at least one portion of data, the previously received request comprising respective communication information for providing the at least one portion of data to the respective media player, the respective communication information comprising a plurality of fields defining parameters used for the providing; and
- generating the test tag information based on at least two of the plurality of fields of the respective communication information by implementing a same operation as for the generation of the tag information based on the at least two of the plurality of fields of the communication information.

13. Method according to claim 10, wherein the obtaining a test tag information comprises:
- reading the test tag information from a list of tag information generated based on at least two of a plurality of fields of respective communication information by implementing a same operation as for the generation of the tag information based on the at least two of the plurality of fields of the communication information, the respective communication information being comprised in a previously received request initiated by a respective media player for at least one portion of data.

14. Computer program product **characterized in that** it comprises program code instructions for implementing a method according to at least one of the claims 1 to 13, when said program is executed on a computer or a processor.

15. Electronic device (110d, 120d) comprising at least one processor or at least one dedicated computing machine configured for carrying out the steps of the method of any of the claims 1 to 13.
